# FASCICULE DE BREVET EUROPEEN

(11) **EP 3 421 832 B1**
(45) Date de publication et mention de la délivrance du brevet: **09.09.2020**
(21) Numéro de dépôt: 18178355.6
(22) Date de dépôt: 18.06.2018
(51) Int. Cl.: F16D 13/64

(54) **DISQUE D'EMBRAYAGE COMPRENANT DES PALES DOTEES DE RAIDISSEURS**
KUPPLUNGSSCHEIBE, DIE BLÄTTER MIT VERSTEIFUNGSELEMENTEN UMFASST
CLUTCH DISC COMPRISING BLADES PROVIDED WITH STIFFENERS

(30) Priorité: 26.06.2017 FR 1755834
(43) Date de publication de la demande: 02.01.2019
(73) Titulaire: Valeo Embrayages, 80009 Amiens (FR)
(72) Inventeur: MARECHAL, Olivier, 80009 Amiens (FR); XU, Yulin, 80009 Amiens (FR)

(56) Documents cités:
- EP-A1- 1 933 052
- EP-A1- 3 147 525
- DE-A1- 19 851 486
- FR-A1- 2 920 500

## Description

L'invention a trait au domaine de la transmission de couple dans les dispositifs motorisés et concerne les embrayages. Elle concerne plus particulièrement un disque d'embrayage.

Les véhicules motorisés, par exemple, peuvent être pourvus d'un embrayage disposé entre le moteur et la transmission. Cet embrayage comporte typiquement un mécanisme d'embrayage et un disque d'embrayage qui présente un organe périphérique de transmission de couple et un organe central de transmission de couple. Lorsque l'embrayage est en mode embrayé, le moteur est relié à la transmission par le disque d'embrayage. L'organe périphérique de transmission de couple est alors généralement pincé par le mécanisme d'embrayage de sorte à être solidaire de la rotation du moteur, et l'organe central de transmission de couple est solidaire en rotation d'un élément de la transmission, tel que l'arbre d'entée de boîte de vitesse d'un véhicule. Lorsque l'embrayage est commandé vers sa positon débrayée, le mécanisme d'embrayage libère le disque d'embrayage et le moteur est découplé de la transmission.

L'organe périphérique de transmission de couple est généralement muni de garnitures de friction. Lors de la transition entre la position débrayée et la position embrayée, l'organe périphérique de transmission de couple est progressivement pincé par le mécanisme d'embrayage de sorte que les garnitures de friction soient progressivement entrainées en rotation par frottement jusqu'à ce que la vitesse de rotation du disque d'embrayage vienne progressivement rejoindre la vitesse de rotation du moteur.

Les garnitures de friction se présentent généralement sous la forme de deux disques annulaires montés dos à dos et disposés sur la partie périphérique du disque d'embrayage. Entre les deux garnitures de friction, il est couramment prévu un dispositif élastique tendant à les écarter l'une de l'autre et permettant d'améliorer la progressivité de la transition entre la position débrayée et la position embrayée. La qualité de cette progressivité est un élément crucial pour un embrayage en matière de sureté de fonctionnement, de confort d'utilisation, et de longévité.

Le document DE102010043443 décrit un disque d'embrayage comportant deux disques de friction constitués chacun d'un disque-support métallique portant une garniture de friction. Ce disque d'embrayage comporte, entre les disques de friction, et plus précisément entre les disques-supports, des pales formant un dispositif élastique. Pour compléter l'action de ce dispositif élastique, et en vue de lisser sa courbe de raideur, les disques de friction comportent, au niveau des disques-supports, des ressorts axiaux auxiliaires. Ces ressorts auxiliaires entrent en service seulement à partir d'une certaine course de rapprochement des deux garnitures de friction et permettent d'agir dynamiquement sur le changement de la raideur du dispositif élastique durant la course de rapprochement des deux garnitures de friction.

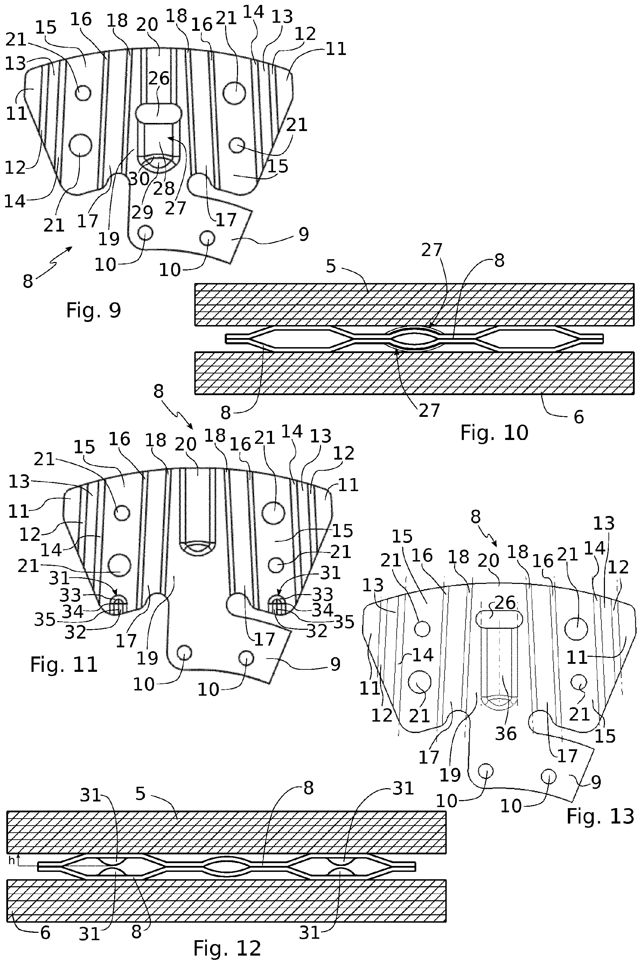

Le document DE102010036169 décrit un disque d'embrayage comportant des pales formant un dispositif élastique entre des garnitures de friction. Dans le mode de réalisation relatif à la figure 10, les pales comportent un embouti radialement externe. Un tel disque d'embrayage est aussi connu du document EP 3 147 525 A1.

L'invention a pour but d'améliorer les disques d'embrayage de l'art antérieur.

A cet effet, l'invention vise un disque d'embrayage pour la liaison d'un moteur et d'une transmission, comportant un organe périphérique de transmission de couple et un organe central de transmission de couple, l'organe périphérique de transmission de couple comprenant deux garnitures de friction annulaires et une pluralité de pales élastiquement déformables selon des plis sensiblement radiaux, les pales exerçant une force axiale tendant à écarter les garnitures de friction l'une de l'autre. Chaque pale comporte en outre au moins un raidisseur embouti interne dans une zone en vis-à-vis de la demi portion annulaire radialement interne des garnitures de friction, la forme du raidisseur embouti étant distincte de la forme donnée par les plis radiaux de la pale.

On appellera par la suite « raidisseur embouti interne » un raidisseur embouti dans une zone en vis-à-vis de la demi portion annulaire radialement interne des garnitures de friction.

Un disque d'embrayage selon l'invention présente une répartition plus homogène des forces de réaction générées par les pales élastiquement déformables. Il apparaît en effet que les pales, lorsqu'elles comportent des plis sensiblement radiaux en vue d'exercer une fonction de ressort, risquent de présenter des déséquilibres dans la répartition radiale, sur la surface de la pale, de la force de réaction qui s'oppose au rapprochement des deux garnitures de friction. L'invention permet d'améliorer l'homogénéité de la pale en matière de répartition de la force de réaction qui est générée par ses propriétés élastiques. L'invention vise à agir sur le profil de la courbe de la force de réaction en fonction du rapprochement des deux disques (progressivité) tout en agissant, en statique, sur la répartition radiale de cette force sur l'ensemble des garnitures de friction pour un rapprochement donné.

Les deux garnitures de friction peuvent en effet occuper une position extrême où elles ne sont pas sollicitées l'une vers l'autre et sont donc éloignées l'une de l'autre au maximum, et une position extrême où les deux garnitures de friction sont pressées au maximum l'une contre l'autre, la course de rapprochement s'étendant entre ces deux positions extrêmes. Pour une positon donnée des deux garnitures de friction au sein de cette course de rapprochement (par exemple, une position où les deux garnitures sont maintenues rapprochées à une moitié de la course de rapprochement, c'est à dire à mi-chemin entre les deux positions extrêmes décrites ci-dessus), l'invention permet d'obtenir une meilleure homogénéité dans la répartition radiale, des forces qui tendent à écarter les deux garnitures de friction.

Les inventeurs ont observé expérimentalement l'influence de différentes formes de pales dans la répartition surfacique de cette force qui tend à écarter les deux garnitures de friction. Ils ont ainsi déterminé l'importance de la zone de placement et de la forme des raidisseurs emboutis.

L'invention assure ainsi une meilleure performance de distribution des pressions sur les garnitures de friction et contribue à un disque d'embrayage plus fiable. De plus, l'usure des garnitures de friction est plus lente et plus régulière.

L'invention est particulièrement avantageuse dans le cas où les disques de friction sont dépourvus de disques-supports. Un disque d'embrayage selon l'invention bénéficie dans ce cas d'une durée de vie au moins égale à celle d'un disque d'embrayage dont les disques de friction sont munis d'un disque-support (couramment dénommé « clinquant »). Ce disque-support permet, dans l'art antérieur, de protéger les garnitures de friction du contact direct des pales qui pourraient l'endommager, notamment par l'incrustation de portions de pales dans les garnitures de friction. Supprimer ces disques-supports rend l'embrayage plus simple et plus robuste, plus léger (cela diminue son inertie de rotation) et plus économique à fabriquer. L'invention donne la possibilité de supprimer ces disques-support sans en subir les conséquences en matière de perte de durée de vie relative à l'incrustation des pales dans les garnitures de friction. L'invention permet l'homogénéisation des forces s'exerçant entre les pales et les garnitures de friction et garanti par conséquent une coopération durable de ces éléments.

Le disque d'embrayage peut comporter les caractéristiques additionnelles listées ci-après, seules ou en combinaison.

Les deux garnitures de friction annulaires sont directement fixées sur la pluralité de pales, la force axiale tendant à écarter les garnitures de friction l'une de l'autre étant transmise directement des pales vers les garnitures de friction.

Ledit au moins un raidisseur embouti interne est situé dans une zone en vis-à-vis de la portion annulaire de premier quart radialement interne des garnitures de friction.

Les pales sont agencées entre les garnitures de friction par paires, chaque paire de pales ayant l'une de ses pales qui est fixée sur l'une des garnitures de friction tandis que l'autre de ses pales est fixée sur l'autre des garnitures de friction et les deux pales de la paire étant superposées.

Avantageusement, chaque pale présente au moins une portion de jonction, les deux pales d'une paire de pales étant superposées l'une sur l'autre via leur portion de jonction.

Chacune des pales comporte au moins une portion plane de fixation en contact plan sur plan avec la garniture de friction correspondante et fixée à la garniture correspondante.

Ledit au moins un raidisseur embouti interne fait saillie depuis une portion plane de fixation.

De préférence, chacune des pales comporte deux portions planes de fixation en contact plan sur plan avec la garniture de friction correspondante.

Chaque pale présente un secteur de recouvrement avec la garniture qu'elle porte, chaque pale comportant en outre un pied de fixation, le secteur de recouvrement comportant une patte de liaison le reliant au pied de fixation, et le secteur de recouvrement de la pale présentant une portion centrale s'étendant radialement depuis la patte de liaison et deux zones latérales agencées circonférenciellement de part et d'autre de la portion centrale.

De préférence, les deux portions planes de fixation sont agencées de part et d'autre de la portion centrale, dans chaque zone latérale.

De préférence, ladite au moins une portion de jonction est agencée sur la portion centrale.

Chaque zone latérale comporte un raidisseur embouti interne.

Chaque pale présente dans l'une au moins de ses zones latérales un lobe radialement interne, le dit au moins un raidisseur embouti interne étant agencé sur ce lobe radialement interne.

De préférence, chaque zone latérale présente un lobe radialement interne comportant chacun un raidisseur embouti interne.

Ledit au moins un raidisseur embouti interne s'étend sensiblement dans la direction circonférentielle.

Avantageusement, ledit au moins un raidisseur embouti interne comporte des plis s'étendant dans la direction circonférentielle.

Ledit au moins un raidisseur embouti interne s'étend sensiblement dans la direction radiale.

Selon un mode de réalisation, ledit au moins un raidisseur embouti interne comporte un pli radial.

Dans une paire de pales, l'une des pales comporte un raidisseur embouti interne agencé en vis à vis d'un raidisseur embouti interne de l'autre pale, les deux raidisseurs emboutis interne en vis-à-vis étant agencés pour être en appui l'un contre l'autre lorsque les garnitures se rapprochent l'une de l'autre.

Dans une paire de pales, les raidisseurs emboutis en vis-à-vis sont agencés de manière à être distants l'un de l'autre lorsque les garnitures sont distantes l'une de l'autre dans une position débrayée, et en appui l'un contre l'autre lorsque les garnitures sont rapprochées l'une de l'autre dans une position embrayée.

Autrement dit, dans un état relâché des pales, en position débrayée, la hauteur axiale du raidisseur embouti interne est plus petite que la distance axiale séparant deux plis radiaux de la pale. Par exemple, on peut mettre en œuvre des raidisseurs emboutis internes d'environ 0.3 mm et avoir une pale occupant un espace axial à l'état relâché d'environ 0,5 mm. Ainsi, on obtient une progressivité avec un effet retard.

Les raidisseurs emboutis internes sont en contact l'un contre l'autre lorsque les garnitures sont distantes l'une de l'autre dans une position débrayée.

Selon un mode de réalisation, ledit au moins un raidisseur embouti interne comporte une portion bombée qui peut, de plus, faire saillie depuis une portion plane de fixation.

Chaque pale comporte en outre au moins un embouti radialement externe dans une zone en vis-à-vis de la demi portion annulaire radialement externe des garnitures de friction.

On appellera par la suite «embouti externe» un embouti dans une zone en vis-à-vis de la demi portion annulaire radialement externe des garnitures de friction.

Ledit au moins un embouti externe présente un sommet orienté en direction de la garniture.

Selon un mode de réalisation, l'embouti externe est agencé sur la portion centrale.

Selon un mode de réalisation, l'embouti externe fait saillie depuis la portion de jonction.

L'un au moins dudit au moins un raidisseur embouti interne a une hauteur axiale différente de la hauteur axiale de l'embouti externe.

Selon un mode de réalisation, la hauteur axiale du raidisseur embouti interne est supérieure à la hauteur de l'embouti externe.

L'embouti externe et l'un au moins dudit au moins un raidisseur embouti interne sont distants l'un de l'autre.

Ainsi, la charge restituée par le raidisseur embouti interne est indépendante de celle restituée par l'embouti externe.

De plus il est possible de choisir la hauteur du raidisseur embouti interne indépendamment de celle de l'embouti externe.

Selon un mode de réalisation, ledit au moins un raidisseur embouti interne est localisé sur la demi portion annulaire radialement interne des garnitures de friction et son relief se prolonge sur la demi portion annulaire radialement externe des garnitures de friction. De même, la forme du raidisseur embouti interne est distincte de la forme donnée par les plis radiaux de la pale.

Selon un mode de réalisation, le raidisseur embouti interne et l'embouti externe sont agencés de façon à se déformer à des instants différents lorsque les garnitures se rapprochent l'une de l'autre.

Selon un mode de réalisation, le raidisseur embouti interne et l'embouti externe sont agencés de façon à se déformer sensiblement au même moment lorsque les garnitures se rapprochent l'une de l'autre.

Ledit au moins un raidisseur embouti interne et l'embouti externe sont agencés dans la portion centrale de la pale.

Ledit au moins un raidisseur embouti interne est disposé à l'extrémité radialement interne dudit embouti externe.

Selon un mode de réalisation, ledit au moins un raidisseur embouti interne présente un sommet orienté en direction de la garniture.

Chaque pâle présente un orifice central agencé sur la portion centrale, et au moins l'un parmi le raidisseur embouti interne et l'embouti externe est adjacent à l'orifice central.

Le raidisseur embouti interne et l'embouti externe sont adjacents à l'orifice central et l'orifice central sépare le raidisseur embouti interne de l'embouti externe.

Ledit au moins un raidisseur embouti interne comporte à une extrémité une portion de dôme.

Avantageusement, la portion de dôme est agencée à une extrémité du raidisseur embouti interne distante d'une bordure de pale, pour assurer la liaison entre le raidisseur embouti interne et le reste de la pale. Selon un mode de réalisation, cette portion de dôme est agencée radialement au regard de la patte de liaison.

Chacune des pales comporte : au moins une portion plane d'extrémité et une portion plane de fixation séparées par un premier pli, une portion inclinée d'extrémité, et un deuxième pli ; chacune des pales comportant en outre une portion centrale, cette portion centrale et la portion plane de fixation étant séparées par un troisième pli, une portion inclinée intérieure, et un quatrième pli.

Selon un mode de réalisation, le raidisseur embouti interne est formé sur la portion centrale.

Selon un mode de réalisation, l'embouti externe est formé également sur la portion centrale.

Deux pales adjacentes fixées sur la même garniture de friction comportent un pied de fixation commun.

Un exemple préféré de réalisation de l'invention va maintenant être décrit en références aux dessins annexés dans lesquels :
- la figure 1 est une vue en perspective d'un disque d'embrayage connu ;
- la figure 2 est une vue en perspective du disque d'embrayage de la figure 1 dont une garniture de friction a été enlevée ;
- la figure 3 est une vue en perspective éclatée de quatre pales du disque d'embrayage de la figure 1 ;
- la figure 4 est une représentation schématique du profil d'une des pales de la figure 3 ;
- la figure 5 représente schématiquement deux pales superposées entre les deux garnitures de friction, dans le disque d'embrayage de la figure 1 ;
- la figure 6 est une vue de face d'une pale du disque d'embrayage de la figure 1 ;
- la figure 7 représente une pale de disque d'embrayage selon un premier mode de réalisation de l'invention ;
- la figure 8 représente schématiquement deux pales selon le premier mode de réalisation, superposées entre les deux garnitures de friction ;
- la figure 9 représente une pale de disque d'embrayage selon un deuxième mode de réalisation de l'invention ;
- la figure 10 représente schématiquement deux pales selon le deuxième mode de réalisation, superposées entre les deux garnitures de friction ;
- la figure 11 représente une pale de disque d'embrayage selon un troisième mode de réalisation de l'invention ;
- la figure 12 représente schématiquement deux pales selon le troisième mode de réalisation, superposées entre les deux garnitures de friction ;
- la figure 13 représente une pale de disque d'embrayage selon un quatrième mode de réalisation de l'invention.

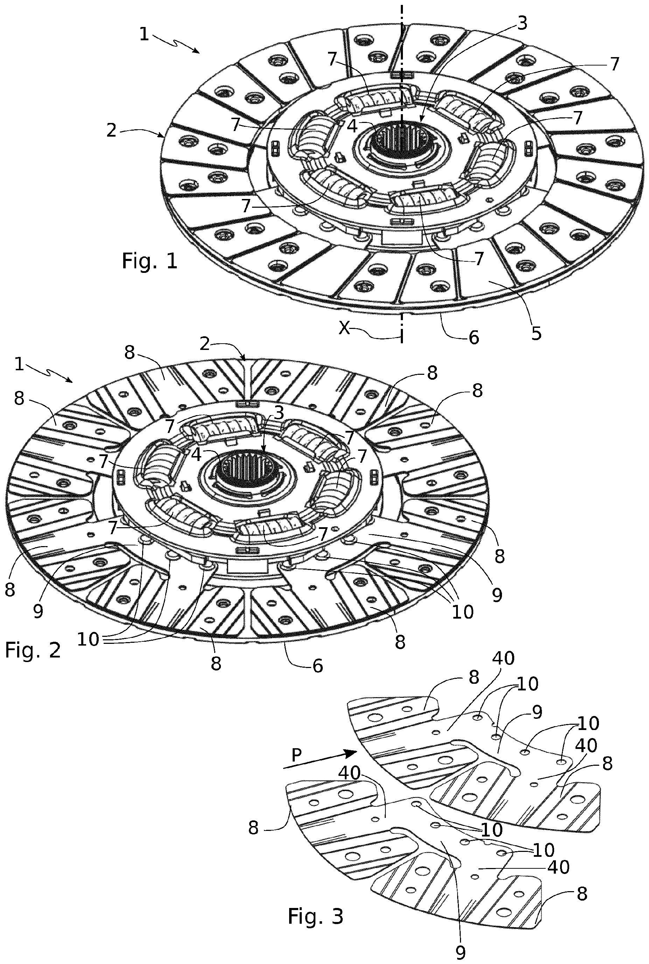

Dans la description et les revendications, on utilisera, les termes "externe" et "interne" ainsi que les orientations "axiale" et "radiale" pour désigner des éléments du disque d'embrayage. L'axe (X) de rotation (représenté figure 1) détermine l'orientation "axiale". L'orientation "radiale" est dirigée orthogonalement à l'axe (X). L'orientation "circonférentielle" est dirigée orthogonalement à l'axe (X) et orthogonalement à la direction radiale. Les termes "externe" et "interne" sont utilisés pour définir la position relative d'un composant par rapport à un autre, par référence à l'axe (X) de rotation, un composant proche dudit axe est ainsi qualifié d'interne par opposition à un composant externe situé radialement en périphérie. Par ailleurs, les angles et secteurs angulaires exprimés sont définis en relation avec l'axe de rotation (X).

La figure 1 représente un disque d'embrayage 1 classique, destiné à relier un moteur et une transmission. Par exemple, dans un véhicule automobile, ce disque d'embrayage va transmettre le couple du moteur à la boite de vitesse avec la possibilité de découpler ces derniers. L'embrayage permet d'embrayer progressivement en entrainant par friction le disque d'embrayage 1.

Le disque d'embrayage 1 transmet le couple entre un organe périphérique de transmission de couple 2 et un organe central de transmission de couple 3.

L'organe central de transmission de couple 3 comporte un moyeu 4, par exemple pour sa liaison avec un arbre de boite de vitesse, tandis que l'organe périphérique de transmission de couple 2 comporte deux garnitures de friction 5, 6 annulaires superposées. Le disque d'embrayage 1 comporte par ailleurs, classiquement, un dispositif d'amortissement des oscillations de rotation dont les ressorts 7 sont visibles sur les figures 1 et 2.

La figure 2 est similaire à la figure 1, si ce n'est que la garniture de friction 5 du dessus (selon la position du disque d'embrayage sur la figure 1) a été retirée pour rendre visible les éléments présents entre les deux garnitures de friction 5, 6. Le disque d'embrayage 1 comporte ainsi une pluralité de pales 8 disposées sur sa périphérie et sur lesquelles sont fixées les garnitures de friction 5, 6. Les pales 8 sont réalisées à partir d'un matériau élastique, par exemple une tôle d'acier, et comportent des plis sensiblement radiaux leur conférant une raideur permettant au pales 8 de remplir une fonction de progressivité, en plus de la fonction de support des garnitures de friction 5, 6. La progressivité est une fonction essentielle pour un disque d'embrayage. Elle nécessite de prévoir un interstice entre les deux garnitures de friction 5, 6, et de disposer dans cet interstice d'un dispositif élastique fournissant une force axiale s'opposant au rapprochement des deux garnitures de friction.

Dans cette optique, les pales 8 sont superposées comme le montre la figure 3 représentant deux couples de pales 8 en vue éclatée. Dans le présent exemple, les pales 8 sont réunies par couple grâce à un pied de jonction 9 comportant des orifice de fixation 10 pour sa fixation, par exemple par rivets, au reste du disque d'embrayage 1. Les deux couples de pales 8 de la figure 3 sont fixés sur le disque d'embrayage 1 de telle sorte que les pales 8 viennent se superposer deux à deux.

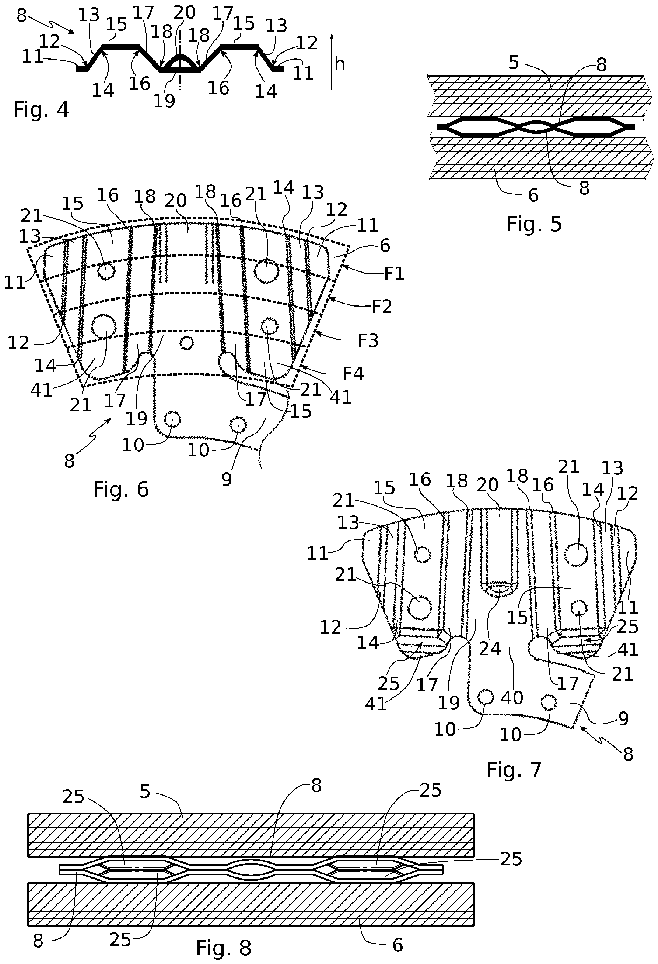

La figure 4 représente le profil d'une pale 8, vu selon la direction de la flèche P de la figure 3. La figure 4 est une représentation schématique et exagérée du profil de la pale 8 afin de le rendre plus visible, les dénivelés engendrés par les plis étant en réalité moins prononcés (voir exemples de valeurs plus bas).

La figure 5 représente schématiquement une portion du disque d'embrayage 1 vu par la tranche. Une portion de la garniture de friction supérieure 5 est représentée en vis à vis d'une portion de la garniture de friction inférieure 6. Entre ces deux portions de garnitures 5, 6, deux pales 8 sont superposées pour assurer leur double fonction de support des disques 5, 6 et de progressivité. Les pales 8 sont donc agencées entre les garnitures de friction 5, 6 par paires, chaque pale 8 d'une paire étant fixée sur une des garnitures de friction 5, 6 et les deux pales 8 d'une paire étant superposées.

En référence à la figure 4, le profil de chaque pale 8 est symétrique selon un axe représenté en traits mixtes. Il comporte, des bords vers le centre :
- une portion plane d'extrémité 11 ;
- un premier pli 12 ;
- une portion inclinée d'extrémité 13 ;
- un deuxième pli 14 ;
- une portion plane de fixation 15 ;
- un troisième pli 16 ;
- une portion inclinée intérieure 17 ;
- un quatrième pli 18 ;
- une portion centrale 19.

Les plis 12, 14, 16, 18 sont sensiblement radiaux, c'est à dire qu'ils s'étendent entre le centre et la périphérie du disque d'embrayage 1.

La portion centrale 19 comporte de plus un embouti externe 20.

Dans le présent exemple : la distance entre le plan de la portion d'extrémité 11 et le plan de la portion plane de fixation 15 est de 0,5 mm ; la distance entre le plan de la portion plane de fixation 15 et le plan de la portion centrale est également de 0,5 mm ; la distance entre le plan de la portion centrale 19 et le sommet de l'embouti 20 est de 0,3 mm.

Les portions planes de fixation 15 comportent des trous d'assemblage 21 permettant de riveter les garnitures de friction 5, 6 contre ces portions planes de fixation 15. Les rivets sont visibles à la figure 1, sur la garniture de friction supérieure.

Au repos, les pales 8 sont dans la positon de la figure 5, c'est à dire que chaque garniture de friction 5, 6 est fixée sur la pale 8 correspondante, et que les pales superposées sont en contact l'une avec l'autre au niveau de leurs portions planes d'extrémité 11 et des quatrièmes plis 18. Les pieds de jonction 9 de chacune de ces pales 8 sont fixés ensemble par les orifices de fixation 10 sur le disque d'embrayage 1. Lorsque, durant le passage de la position débrayée à la position embrayée, le disque d'embrayage est pincé de sorte que les deux garnitures de friction 5, 6 sont pressées l'une contre l'autre, les pales 8 se déforment élastiquement en opposant une raideur à ce mouvement, jusqu'à ce que les deux pales 8 deviennent quasiment planes sous la pression des deux garnitures de friction 5, 6.

La figure 6 représente une pale 8 vue de face, ainsi que, en pointillés, une portion angulaire de la garniture de friction 6 sur laquelle est montée la pale 8. Sur le dessin, cette portion de garniture de friction 6 a été divisée en quatre zones annulaires F1, F2, F3, F4 concentriques matérialisées en pointillés. Les zones annulaires F1, F2, F3, F4 se répartissent entre une zone F4 la plus radialement interne et une zone F1 la plus radialement externe. La zone F4 est dénommée « zone de premier quart radialement interne des garnitures de friction ». Les deux zones F3, F4 les plus radialement internes font partie de la demi-portion annulaire radialement interne des garnitures de friction, tandis que les deux zones F1, F2 les plus radialement externes font partie de la demi-portion annulaire radialement externe des garnitures de friction. Autrement dit, les garnitures de friction sont divisés en deux parties annulaires (au niveau d'un cercle passant par la frontière commune des zones F2 et F3), ces deux parties annulaires étant dénommées demi-portion annulaire radialement interne et demi-portion annulaire radialement externe. Ce découpage permet de mesurer expérimentalement la distribution de la force de réaction d'une pale 8 sous différentes configurations. L'embouti externe 20 que comporte chaque pale 8 s'étend dans les zones F1 et F2 et est donc situé dans la zone de la pale 8 qui est en vis-à-vis de la demi-portion annulaire radialement externe des garnitures de friction 5, 6.

Chaque pale 8 présente un secteur de recouvrement avec la garniture 5, 6 qu'elle porte et chaque pale 8 comporte en outre un pied de fixation 9.

Le secteur de recouvrement comporte une patte de liaison 40 le reliant au pied de fixation 9, et le secteur de recouvrement de la pale présente une portion centrale s'étendant radialement depuis la patte de liaison 40 et deux zones latérales agencées circonférenciellement de part et d'autre de la portion centrale.

De préférence, les deux portions planes de fixation 15 sont agencées de part et d'autre de la portion centrale, dans chaque zone latérale.

Chaque pale présente au moins une portion de jonction, les deux pales d'une paire de pales étant superposées l'une sur l'autre via leur portion de jonction. Les portions de jonction des pales sont agencées sur leur portion centrale.

Une pale 8 connue, telle que représentée à la figure 6, obtient les résultats suivants en termes de distribution des efforts générés par sa réaction sur les garnitures de friction.

| Zone F1 | Zone F2 | Zone F3 | Zone F4 | Total |
|---|---|---|---|---|
| 30,14 % | 31,57 % | 30,66 % | 7,63 % | 100 % |

Pour réaliser ces mesures, la pale 8 seule est disposée entre deux surfaces planes qui sont toutes deux rapprochées jusqu'au contact avec la pale 8. A partir de cette position, les deux surfaces planes sont rapprochées de 0,3 mm, c'est à dire que les deux surfaces planes compriment la pale 8 de 0,3 mm en la déforment élastiquement puis maintiennent cette position de manière statique. La force de réaction totale de la pale 8 est alors mesurée en newtons, ainsi que la force de réaction de la pale 8 sur les quatre surfaces correspondant aux zones F1, F2, F3, F4. Le rapport exprimé en pourcentage dans le tableau ci-dessus correspond au rapport de la force de réaction de la surface concernée sur la force de réaction totale.

Selon l'invention, les pales 8 sont dotées d'un ou plusieurs raidisseurs emboutis qui sont situés dans une zone de la pale située en vis-à-vis de la demi-portion annulaire radialement interne des garnitures de friction 5, 6. Ces raidisseurs emboutis peuvent prendre différentes formes et quatre modes de réalisation correspondant respectivement aux figures 7 à 13 seront décrits. Dans les figures 7 à 13, les éléments communs avec la description précédente, relative à un disque d'embrayage classique, sont numérotés de la même manière.

La figure 7 est relative à un premier mode de réalisation de raidisseurs emboutis radialement interne. Selon ce mode de réalisation, un raidisseur embouti 25 est situé dans chaque portion plane de fixation 15, à son extrémité radialement interne. Les raidisseurs emboutis internes 25 sont constitués de plis rectilignes s'étendant dans la direction circonférentielle et qui sont sécants au deuxième pli 14 et au troisième pli 16. Les raidisseurs emboutis sont donc situés dans la zone de la pale 8 qui est en vis-à-vis de la demi-portion annulaire radialement interne des garnitures de friction 5, 6, et plus précisément dans la zone de la pale 8 qui est en vis-à-vis de la zone F4 de premier quart radialement interne des garnitures de friction.

Chaque pale présente dans chaque zone latérale un lobe radialement interne 41, et un raidisseur embouti interne 25 est agencé sur chacun de ces lobes radialement interne 41.

De façon optionnelle, la pale 8 comporte de plus un autre raidisseur embouti interne 24 situé dans le prolongement de l'embouti externe 20, à son extrémité radialement interne. Ce deuxième raidisseur embouti 24 est donc situé dans la zone de la pale 8 qui est en vis-à-vis de la zone F3 de deuxième quart radialement interne des garnitures de friction.

La pale 8 selon ce premier mode de réalisation obtient les résultats suivants en termes de distribution des efforts générés par sa réaction sur les garnitures de friction, selon les mêmes conditions de mesures indiquées ci-dessus pour la pale connue.

| Zone F1 | Zone F2 | Zone F3 | Zone F4 | Total |
|---|---|---|---|---|
| 26,1 % | 24,8 % | 18,3 % | 30,8 % | 100 % |

La figure 8 est une vue schématique similaire à la figure 5, montrant la coopération de deux pales selon ce premier mode de réalisation, représentées à la figure 7, et de deux garnitures de friction 5, 6. La figure 8 montre plus particulièrement la disposition mutuelle des raidisseurs emboutis 25.

Le fait que les raidisseurs emboutis internes 25 soient distants de l'embouti externe 20 permet de dimensionner leur hauteur comme on le souhaite. La hauteur axiale des raidisseurs emboutis internes 25 est supérieure à la hauteur axiale de l'embouti externe 20.

Ici, la hauteur des raidisseurs emboutis internes 20 est d'environ 0,5 mm. On peut ainsi adapter la hauteur du raidisseur embouti interne 25 de sorte que, sur une même paire de pales superposées, les deux raidisseurs emboutis internes 25 soient en contact l'un contre l'autre au repos, c'est-à-dire lorsque les garnitures 5, 6 ne sont pas pincées.La figure 9 est relative à un deuxième mode de réalisation de raidisseur embouti radialement interne. Selon ce mode de réalisation, la pale 8 comporte une ouverture centrale 26 qui marque l'extrémité radialement interne de l'embouti externe 20. Le raidisseur embouti interne 27 est situé dans la portion centrale 19, de l'autre côté de l'ouverture centrale 26. Il est constitué d'une portion bombée 28 qui rencontre, à son extrémité radialement interne, une portion de dôme 29 qui rejoint le plan de la portion centrale 19. La portion de dôme 29 comporte un pli 30 s'étendant dans la direction circonférentielle. La portion bombée 28 suit une courbure similaire à la courbure de l'embouti 28 mais de préférence plus importante, c'est à dire que la portion bombée 28 s'élève à une distance plus importante par rapport au plan de la portion centrale 19. Selon ce mode de réalisation , la hauteur axiale du raidisseur embouti interne 27 est supérieure à la hauteur axiale de l'embouti externe 20. A titre d'exemple, si l'embouti externe 20 culmine à 0,3 mm du plan de la portion centrale 19, la portion bombée 28 culmine avantageusement à 0,4 mm. Le raidisseur embouti 27 est donc situé dans la zone de la pale 8 qui est en vis-à-vis de la demi-portion annulaire radialement interne des garnitures de friction 5, 6, et plus précisément dans la zone de la pale 8 qui est en vis-à-vis des zones F3 et F4.

La pale 8 selon ce deuxième mode de réalisation obtient les résultats suivants en termes de distribution des efforts générés par sa réaction sur les garnitures de friction, selon les mêmes conditions de mesures indiquées ci-dessus pour la pale connue.

| Zone F1 | Zone F2 | Zone F3 | Zone F4 | Total |
|---|---|---|---|---|
| 24 % | 22,45 % | 27,9 % | 25,65 % | 100 % |

La figure 10 est une vue schématique similaire à la figure 5, montrant la coopération de deux pales selon ce deuxième mode de réalisation, représentées à la figure 9, et de deux garnitures de friction 5, 6. La figure 10 montre plus particulièrement la disposition mutuelle des raidisseurs emboutis 27.

La figure 11 est relative à un troisième mode de réalisation de raidisseur embouti radialement interne. Selon ce mode de réalisation, un raidisseur embouti 31 est situé dans chaque portion plane de fixation 15, à son extrémité radialement interne. Les raidisseurs emboutis 31 sont constitués d'une portion bombée 32 et d'une portion de dôme 33 et comportent en outre un pli 34 s'étendant dans la direction circonférentielle ainsi qu'un pli 35 s'étendant dans la direction radiale. Les raidisseurs emboutis sont donc situés dans la zone de la pale 8 qui est en vis-à-vis de la demi-portion annulaire radialement interne des garnitures de friction 5, 6, et plus précisément dans la zone de la pale 8 qui est en vis-à-vis de la zone F4 de premier quart radialement interne des garnitures de friction.

La pale 8 selon ce troisième mode de réalisation obtient les résultats suivants en termes de distribution des efforts générés par sa réaction sur les garnitures de friction, selon les mêmes conditions de mesures indiquées ci-dessus pour la pale connue.

| Zone F1 | Zone F2 | Zone F3 | Zone F4 | Total |
|---|---|---|---|---|
| 22 % | 21 % | 21 % | 36 % | 100 % |

La figure 12 est une vue schématique similaire à la figure 5, montrant la coopération de deux pales selon ce troisième mode de réalisation, représentées à la figure 11, et de deux garnitures de friction 5, 6. La figure 12 montre plus particulièrement la disposition mutuelle des raidisseurs emboutis 31.

Dans ces trois premiers modes de réalisation, on voit que la mise en œuvre d'un raidisseur embouti interne à distance de l'embouti externe permet d'assurer une bonne répartition radiale des efforts. On voit notamment que dans la zone F4, le pourcentage des efforts est supérieur à 25% pour ces trois modes de réalisation.

La figure 13 est relative à un quatrième mode de réalisation de raidisseur embouti radialement interne. Selon ce mode de réalisation, comme dans le deuxième mode de réalisation, la pale 8 comporte une ouverture centrale 26. Le raidisseur embouti 36 est ici situé dans la portion centrale 19, en position radialement interne par rapport à l'ouverture centrale 26. Le raidisseur embouti interne 36 est donc situé dans la zone de la pale 8 qui est en vis-à-vis de la demi-portion annulaire radialement interne des garnitures de friction 5, 6, et plus précisément dans la zone de la pale 8 qui est en vis-à-vis des zones F3 et F4.

La pale 8 selon ce quatrième mode de réalisation obtient les résultats suivants en termes de distribution des efforts générés par sa réaction sur les garnitures de friction, selon les mêmes conditions de mesures indiquées ci-dessus pour la pale connue.

| Zone F1 | Zone F2 | Zone F3 | Zone F4 | Total |
|---|---|---|---|---|
| 15,4 % | 32,7 % | 31,2 % | 20,7 % | 100 % |

Les quatre modes de réalisation de pales 8 obtiennent tous de bons résultats, bien que différents d'un mode à l'autre, en matière de répartition des forces de réaction, suffisamment pour éviter notamment des zones d'incrustation des pales dans les garnitures de friction 5, 6.

D'autres variantes de réalisation du disque d'embrayage peuvent être mises en œuvre sans sortir du cadre de l'invention. Par exemple, les pales 8 peuvent être conçues autrement que par couples reliés par un pied de jonction 9, elles peuvent être conçues sous forme de pales indépendantes, chacune munie d'un pied la rattachant au reste du disque d'embrayage, ou bien sous forme d'un ensemble plus important de pales partageant alors un pied de jonction reliant trois pales ou plus.

Par ailleurs, les pales 8 peuvent avoir un quelconque profil (en référence à la figure 4), à partir du moment où elles présentent des propriétés élastiques dues à des plis sensiblement radiaux, qui peuvent donc être différents en quantité et en positionnement de l'exemple ici décrit.

Les différents modes de réalisation des pales 8 peuvent également être combinés et les garnitures de friction peuvent de plus être munies de disques-supports.

## Revendications

1. Disque d'embrayage (1) pour la liaison d'un moteur et d'une transmission, comportant un organe périphérique de transmission de couple (2) et un organe central de transmission de couple (3), l'organe périphérique de transmission de couple (2) comprenant deux garnitures de friction (5, 6) annulaires et une pluralité de pales (8) élastiquement déformables selon des plis (12, 14, 16, 18) sensiblement radiaux, les pales (8) exerçant sur les garnitures de friction (5, 6) une force axiale tendant à écarter les garnitures de friction (5, 6) l'une de l'autre, **caractérisé en ce que** chaque pale (8) comporte en outre au moins un raidisseur embouti interne 24, 25, 27, 31, 36) dans une zone en vis-à-vis de la demi portion annulaire radialement interne (F3, F4) des garnitures de friction (5, 6), la forme du raidisseur embouti interne étant distincte de la forme donnée par les plis radiaux de la pale.

2. Disque d'embrayage selon la revendication 1, **caractérisé en ce que** les deux garnitures de friction (5, 6) annulaires sont directement fixées sur la pluralité de pales (8), la force axiale tendant à écarter les garnitures de friction (5, 6) l'une de l'autre étant transmise directement des pales vers les garnitures de friction (5, 6).

3. Disque d'embrayage selon l'une des revendications 1 à 2, **caractérisé en ce que** ledit au moins un raidisseur embouti interne est situé dans une zone en vis-à-vis de la portion annulaire de premier quart radialement interne (F4) des garnitures de friction (5, 6).

4. Disque d'embrayage selon l'une des revendications 1 à 3, **caractérisé en ce que** les pales (8) sont agencées entre les garnitures de friction (5, 6) par paires, chaque paire de pâles ayant l'une de ses pâles qui est fixée sur l'une des garnitures de friction (5) tandis que l'autre de ses pâles est fixée sur l'autre des garnitures de friction (6) et les deux pales (8) de la paire étant superposées.

5. Disque d'embrayage selon l'une des revendications 1 à 4, **caractérisé en ce que** chacune des pales (8) comporte au moins une portion plane de fixation (15) en contact plan sur plan avec la garniture de friction (5, 6) correspondante et fixée à la garniture correspondante.

6. Disque d'embrayage selon la revendication précédente, **caractérisé en ce que** ledit au moins un raidisseur embouti interne fait saillie depuis une portion plane de fixation (15).

7. Disque d'embrayage selon l'une des revendications précédentes, **caractérisé en ce que** chaque pale présente un secteur de recouvrement avec la garniture qu'elle porte, chaque pale comportant en outre un pied de fixation (9), le secteur de recouvrement comportant une patte de liaison (40) le reliant au pied de fixation (9), et le secteur de recouvrement de la pale présentant une portion centrale s'étendant radialement depuis la patte de liaison et deux zones latérales agencées circonférenciellement de part et d'autre de la portion centrale.

8. Disque d'embrayage selon la revendication précédente, **caractérisé en ce que** chaque zone latérale comporte un raidisseur embouti interne.

9. Disque d'embrayage selon l'une des revendications 7 à 8, **caractérisé en ce que** chaque pale présente dans l'une au moins de ses zones latérales un lobe radialement interne (41), le dit au moins un raidisseur embouti interne (25, 31) étant agencé sur ce lobe radialement interne (41).

10. Disque d'embrayage selon l'une des revendications précédentes, **caractérisé en ce que** ledit au moins un raidisseur embouti interne (25) s'étend sensiblement dans la direction circonférentielle.

11. Disque d'embrayage selon l'une des revendications 1 à 9, **caractérisé en ce que** ledit au moins un raidisseur embouti interne (35) s'étend sensiblement dans la direction radiale.

12. Disque d'embrayage selon l'une des revendications 4 à 11, **caractérisé en ce que** dans une paire de pales, l'une des pales comporte un raidisseur embouti interne agencé en vis à vis d'un raidisseur embouti interne de l'autre pale, les deux raidisseurs emboutis interne en vis-à-vis étant agencés pour être en appui l'un contre l'autre lorsque les garnitures se rapprochent l'une de l'autre.

13. Disque d'embrayage selon la revendication précédente, **caractérisé en ce que**, dans une paire de pales, les raidisseurs emboutis en vis-à-vis sont agencés de manière à être distants l'un de l'autre lorsque les garnitures sont distantes l'une de l'autre dans une position débrayée, et en appui l'un contre l'autre lorsque les garnitures sont rapprochées l'une de l'autre dans une position embrayée.

14. Disque d'embrayage selon la revendication 12, **caractérisé en ce que** les raidisseurs emboutis internes sont en contact l'un contre l'autre lorsque les garnitures sont distantes l'une de l'autre dans une position débrayée.

15. Disque d'embrayage selon l'une des revendications précédentes, **caractérisé en ce que** chaque pale (8) comporte en outre au moins un embouti radialement externe (20) dans une zone en vis-à-vis de la demi portion annulaire radialement externe (F1, F2) des garnitures de friction (5, 6).

## Patentansprüche

1. Kupplungsscheibe (1) zur Verbindung eines Motors und eines Getriebes, umfassend ein peripheres Drehmomentübertragungselement (2) und ein zentrales Drehmomentübertragungselement (3), wobei das periphere Drehmomentübertragungselement (2) zwei ringförmige Reibungsbeläge (5, 6) und eine Vielzahl von Blättern (8) umfasst, die gemäß im Wesentlichen radialer Falze (12, 14, 16, 18) elastisch verformbar sind, wobei die Blätter (8) auf die Reibungsbeläge (5, 6) eine axiale Kraft ausüben, die darauf abzielt, die Reibungsbeläge (5, 6) voneinander zu beabstanden, **dadurch gekennzeichnet, dass** jedes Blatt (8) außerdem mindestens ein internes tiefgezogenes Verstärkungselement (24, 25, 27, 31, 36) in einer Zone gegenüber dem radial internen ringförmigen Halbabschnitt (F3, F4) der Reibungsbeläge (5, 6) umfasst, wobei die Form des internen tiefgezogenen Verstärkungselements von der Form verschieden ist, die von den radialen Falzen des Blatts vorgegeben wird.

2. Kupplungsscheibe nach Anspruch 1, **dadurch gekennzeichnet, dass** die beiden ringförmigen Reibungsbeläge (5, 6) direkt an der Vielzahl von Blättern (8) befestigt sind, wobei die axiale Kraft, die darauf abzielt, die Reibungsbeläge (5, 6) voneinander zu beabstanden, direkt von den Blättern auf die Reibungsbeläge (5, 6) übertragen wird.

3. Kupplungsscheibe nach einem der Ansprüche 1 bis 2, **dadurch gekennzeichnet, dass** das mindestens eine interne tiefgezogene Verstärkungselement in einer Zone gegenüber dem ringförmigen Abschnitt des ersten radial internen Viertels (F4) der Reibungsbeläge (5, 6) angeordnet ist.

4. Kupplungsscheibe nach einem der Ansprüche 1 bis 3, **dadurch gekennzeichnet, dass** die Blätter (8) zwischen den Reibungsbelägen (5, 6) in Paaren eingerichtet sind, wobei jedes Paar von Blättern eines seiner Blätter aufweist, das an einem der Reibungsbeläge (5) befestigt ist, während das andere seiner Blätter an dem anderen der Reibungsbeläge (6) befestigt ist, und wobei die beiden Blätter (8) des Paars übereinanderliegen.

5. Kupplungsscheibe nach einem der Ansprüche 1 bis 4, **dadurch gekennzeichnet, dass** jedes der Blätter (8) mindestens einen ebenen Befestigungsabschnitt (15) in ebenem Kontakt mit dem entsprechenden Reibungsbelang (5, 6) und befestigt an dem entsprechenden Belag aufweist.

6. Kupplungsscheibe nach dem vorhergehenden Anspruch, **dadurch gekennzeichnet, dass** das mindestens eine interne tiefgezogene Verstärkungselement von einem ebenen Befestigungsabschnitt (15) vorsteht.

7. Kupplungsscheibe nach einem der vorhergehenden Ansprüche, **dadurch gekennzeichnet, dass** jedes Blatt einen Bedeckungssektor mit dem Belag aufweist, den es trägt, wobei jedes Blatt außerdem einen Befestigungsfuß (9) umfasst, wobei der Bedeckungssektor ein Verbindungsbein (40) umfasst, das ihn mit dem Befestigungsfuß (9) verbindet, und wobei der Bedeckungssektor des Blatts einen zentralen Abschnitt, der sich radial von dem Verbindungsbein erstreckt, und zwei laterale Zonen, die in Umfangsrichtung auf beiden Seiten des zentralen Abschnitts eingerichtet sind, aufweist.

8. Kupplungsscheibe nach dem vorhergehenden Anspruch, **dadurch gekennzeichnet, dass** das jede laterale Zone ein internes tiefgezogenes Verstärkungselement umfasst.

9. Kupplungsscheibe nach einem der Ansprüche 7 bis 8, **dadurch gekennzeichnet, dass** jedes Blatt in mindestens einer seiner lateralen Zonen eine radial interne Nase (41) aufweist, wobei das genannte mindestens eine interne tiefgezogene Verstärkungselement (25, 31) auf dieser radial internen Nase (41) eingerichtet ist.

10. Kupplungsscheibe nach einem der vorhergehenden Ansprüche, **dadurch gekennzeichnet, dass** sich das genannte mindestens eine interne tiefgezogene Verstärkungselement (25) im Wesentlichen in der Umfangsrichtung erstreckt.

11. Kupplungsscheibe nach einem der Ansprüche 1 bis 9, **dadurch gekennzeichnet, dass** sich das genannte mindestens eine interne tiefgezogene Verstärkungselement (35) im Wesentlichen in der radialen Richtung erstreckt.

12. Kupplungsscheibe nach einem der Ansprüche 4 bis 11, **dadurch gekennzeichnet, dass** in einem Paar von Blättern das eine der Blätter ein internes tiefgezogenes Versteifungselement umfasst, das gegenüber einem internen tiefgezogenen Verstärkungselement des anderen Blatts eingerichtet ist, wobei die beiden gegenüberliegenden internen tiefgezogenen Verstärkungselemente eingerichtet sind, um gegeneinander anzuliegen, wenn die Beläge sich aneinander annähern.

13. Kupplungsscheibe nach dem vorhergehenden Anspruch, **dadurch gekennzeichnet, dass** in einem Paar von Blättern die gegenüberliegenden tiefgezogenen Verstärkungselemente eingerichtet sind, um voneinander entfernt zu sein, wenn die Beläge in einer ausgekuppelten Position voneinander entfernt sind, und in Anlage gegeneinander, wenn sich die Beläge in einer eingekuppelten Position aneinander annähern.

14. Kupplungsscheibe nach Anspruch 12, **dadurch gekennzeichnet, dass** die internen tiefgezogenen Verstärkungselemente in Kontakt gegeneinander sind, wenn die Beläge in einer ausgekuppelten Position voneinander entfernt sind.

15. Kupplungsscheibe nach einem der vorhergehenden Ansprüche, **dadurch gekennzeichnet, dass** jedes Blatt (8) außerdem mindestens einen radial externen Tiefziehteil (20) in einer Zone gegenüber dem radial externen ringförmigen Halbabschnitt (F1, F2) der Reibungsbeläge (5, 6) umfasst.

## Claims

1. Clutch disc (1) for connecting an engine and a transmission, containing a peripheral torque transmission element (2) and a central torque transmission element (3), the peripheral torque transmission element (2) comprising two annular friction linings (5, 6) and a plurality of paddles (8) elastically deformable along substantially radial fold lines (12, 14, 16, 18), the paddles (8) exerting on the friction linings (5, 6) an axial force which seeks to move the friction linings (5, 6) away from each other, **characterized in that** each paddle (8) contains in addition at least one internal pressed stiffener (24, 25, 27, 31, 36) in an area facing the radially internal annular half portion (F3, F4) of the friction linings (5, 6), the form of the internal pressed stiffener being distinct from the form imparted by the radial fold lines of the paddle.

2. Clutch disc according to Claim 1, **characterized in that** the two annular friction linings (5, 6) are attached directly to the plurality of paddles (8), the axial force which seeks to move the friction linings (5, 6) away from each other being transmitted directly from the paddles towards the friction linings (5, 6).

3. Clutch disc according to one of Claims 1 to 2, **characterized in that** said at least one internal pressed stiffener is situated in an area facing the annular portion of the first radially internal quarter (F4) of the friction linings (5, 6).

4. Clutch disc according to one of Claims 1 to 3, **characterized in that** the paddles (8) are arranged between the friction linings (5, 6) in pairs, each pair of paddles having one of its paddles which is attached to one of the friction linings (5), whereas the other of its paddles is attached to the other of the friction linings (6), and the two paddles (8) of the pair being layered.

5. Clutch disc according to one of Claims 1 to 4, **characterized in that** each of the paddles (8) contains at least one plane attachment portion (15) in surface-to-surface contact with the corresponding friction lining (5, 6) and attached to the corresponding lining.

6. Clutch disc according to the preceding Claim, **characterized in that** said at least one internal pressed stiffener protrudes from a plane attachment portion (15).

7. Clutch disc according to one of the preceding Claims, **characterized in that** each paddle exhibits a zone of overlap with the lining that it carries, each paddle containing in addition an attachment foot (9), the zone of overlap containing a connecting tab (40) connecting it to the attachment foot (9), and the zone of overlap of the paddle exhibiting a central portion extending radially from the connecting tab and two lateral areas arranged circumferentially to either side of the central portion.

8. Clutch disc according to the preceding Claim, **characterized in that** each lateral area contains an internal pressed stiffener.

9. Clutch disc according to one of Claims 7 to 8, **characterized in that** each paddle exhibits in one at least of its lateral areas a radially internal lobe (41), said at least one internal pressed stiffener (25, 31) being arranged on this radially internal lobe (41).

10. Clutch disc according to one of the preceding Claims, **characterized in that** said at least one internal pressed stiffener (25) extends substantially in the circumferential direction.

11. Clutch disc according to one of Claims 1 to 9, **characterized in that** said at least one internal pressed stiffener (35) extends substantially in the radial direction.

12. Clutch disc according to one of Claims 4 to 11, **characterized in that**, in a pair of paddles, one of the paddles contains an internal pressed stiffener arranged facing an internal pressed stiffener of the other paddle, the two internal pressed stiffeners facing each another being arranged to be supported one against the other when the linings move towards each other.

13. Clutch disc according to the preceding Claim, **characterized in that**, in a pair of paddles, the pressed stiffeners facing each another are arranged in such a way as to be remote from each other when the linings are remote from each other in a disengaged position, and are supported one against the other when the linings are moved towards each other in an engaged position.

14. Clutch disc according to Claim 12, **characterized in that** the internal pressed stiffeners are supported one against the other when the linings are remote from each other in a disengaged position.

15. Clutch disc according to one of the preceding Claims, **characterized in that** each paddle (8) contains in addition at least one radially external pressing (20) in an area facing the radially external annular half portion (F1, F2) of the friction linings (5, 6).
